Europäisches Patentamt

European Patent Office

Office européen des brevets

(19)

(11) Veröffentlichungsnummer : **0 046 889**
**B1**

(12) **EUROPÄISCHE PATENTSCHRIFT**

(45) Veröffentlichungstag der Patentschrift :
**16.11.83**

(51) Int. Cl.³ : **B 01 D 13/00**

(21) Anmeldenummer : **81106052.4**

(22) Anmeldetag : **01.08.81**

(54) Vorrichtung zur Wärme- und Stoffübertragung mittels Hohlfasern.

(30) Priorität : **28.08.80 DE 3032417**
**10.07.81 DE 3127282**

(43) Veröffentlichungstag der Anmeldung :
**10.03.82 Patentblatt 82/10**

(45) Bekanntmachung des Hinweises auf die Patenterteilung : **16.11.83 Patentblatt 83/46**

(84) Benannte Vertragsstaaten :
**BE FR GB IT LU NL SE**

(56) Entgegenhaltungen :
**DE A 2 239 931**
**DE A 2 513 751**
**DE A 2 950 426**

(73) Patentinhaber : **Akzo GmbH**
**Postfach 10 01 49 Kasinostrasse 19-23**
**D-5600 Wuppertal-1 (DE)**

(72) Erfinder : **Wollbeck, Rudi**
**Am Stadtwald 24**
**D-8765 Erlenbach/Main (DE)**
Erfinder : **Zang, Thomas**
**Ziegelbergweg 9**
**D-8752 Goldbach (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Vorrichtung zur Wärme- und Stoffübertragung mittels Hohlfasern

Vorrichtungen zur Wärme- und Stoffübertragung mittels Hohlfasern finden sowohl in technischen als auch in medizinischen und anderen Bereichen eine immer breiter werdende Anwendung. Häufig ist dabei nur eine einmalige oder kurzzeitige Verwendung der die Übertragung bewirkenden Hohlfasern möglich. Überall dort, wo eine Reinigung oder Regenerierung der verunreinigten oder erschöpften Hohlfasern nicht möglich ist, müssen diese verworfen und gegen ungebrauchte ausgewechselt werden. In vielen anderen Fällen ist eine Wiederherstellung der Wirkung der Hohlfasern nur außerhalb der eigentlichen Vorrichtung in eigens hierfür bestimmten Einrichtungen möglich.

Es bestand daher der verständliche Wunsch, diese Austauscheinrichtungen derart zu gestalten, daß das Auswechseln derselben auch von ungeübtem Personal, ja sogar von Laien, durchgeführt werden kann, wobei die Austauscheinrichtungen auch aus wirtschaftlichen Gründen einfach aufgebaut und schnell und einfach zu fertigen sein sollten. Da einerseits beim Auswechseln der Austauscheinrichtungen die Hohlfasern nicht beschädigt werden dürfen, andererseits eine zuverlässige Abdichtung der im Austausch miteinander stehenden Fluide gegeneinander gewährleistet sein muß, war es üblich, die Hohlfaserpakete oder -bündel durch Kleben, Schweißen, Vergießen u. dgl. unlösbar mit dem Gehäuse, welches die erforderlichen Ein- und Austrittsöffnungen für die betreffenden Fluide aufwies zu verbinden. Nach Erschöpfung der die Übertragung bewirkenden Hohlfasern mußte bei diesen Vorrichtungen daher auch das an sich noch gebrauchsfähige Gehäuse zusammen mit den Hohlfasern verworfen werden.

Es wurde daher auch schon vorgeschlagen, die Hohlfaserbündel lösbar mit dem Gehäuse zu verbinden, so daß bei Erschöpfung der Hohlfasern nur noch der eigentliche Hohlfaserkörper ausgetaucht zu werden braucht. Eine solche Vorrichtung ist beispielsweise in der DT-A-2 400 020 beschrieben.

Bei dieser Vorrichtung sind an den Enden des Hohlfasermoduls Dichtungen vorgesehen, die die Abdichtung der Kammern des einen Fluids gegenüber den Kammern des anderen Fluids bewirken. Nachteilig bei dieser bekannten Vorrichtung ist jedoch, daß während des Einbaues, d. h. beim Hineindrücken des Hohlfasermoduls in das Gehäuse, eine der beiden Dichtungen auf fast der gesamten Länge des Gehäuses über die Gehäuseinnenmantelfläche schleift und dabei gegenbenenfalls beschädigt wird, und zwar insbesondere dann, wenn sich wie üblich in dem von der Dichtung überstrichenen Bereich noch Zu- und Abführöffnungen für eines der beiden Fluide befinden. Darüber hinaus ist es bei dieser bekannten Vorrichtung nicht möglich, ohne weiteres zwischen einer Undichtigkeit, bewirkt durch eine defekte Hohlfaser, und einer Undichtigkeit, bewirkt durch eine defekte Dichtung, zu unterscheiden.

Der vorliegenden Erfindung liegt daher die Aufgabe zugrunde, eine gattungsgemäße Vorrichtung zur Verfügung zu stellen, bei der beim Einbau des Hohlfaserbündels die Dichtungen weitestgehend geschont werden, bei der ein aus einer der Fluidkammern durch eine defekte Dichtung austretender Leckstrom nicht in die Kammern des anderen Fluids gelangt, sondern nach außen, und beispielsweise für das Bedienungspersonal sichtbar, abgeleitet wird, die zudem ein auch für ungeübtes Personal zu bewerkstelligendes rasches Auswechseln nur des in Form eines vorgefertigten Moduls vorliegenden Hohlfaserbündels gestattet und bei der die Dichtungen mehrfach wiederverwendbar sind, wobei insbesondere der Hohlfasermodul einfach aufgebaut und daher schnell und einfach zu fertigen ist.

Zur Lösung dieser Aufgabe wird eine gattungsgemäße Vorrichtung vorgeschlagen, bei der erfindungsgemäß im Bereich der Vergußmasseeinbettungen der Hohlfaserenden ein Zwischenring, zwischen dem Zwischenring und der Innenfläche des Gehäusemantels in einem Abstand voneinander wenigstens zwei äußere Dichtungen, zwischen dem Zwischenring und den Mantelflächen der Vergußmasseeinbettungen in einem Abstand voneinander wenigstens zwei innere Dichtungen, wenigstens eine im wesentlichen radial durch den Zwischenring verlaufende zwischen den äußeren Dichtungen und zwischen den inneren Dichtungen mündende Bohrung und zwischen den inneren Dichtungen mündende Bohrung und zwischen den äußeren Dichtungen wenigstens eine zusätzliche Fluidaustrittsöffnung im Gehäusemantel angeordnet sind.

Zur Festlegung der Dichtungen bzw. Dichtringe, d. h. zur Vermeidung ihres seitlichen d. h. axialen Verrutschens während des Einbaues des Hohlfasermoduls in das Gehäuse und während des Betriebes, können an der Innenseite des Gehäusemantels der erfindungsgemäßen Vorrichtung bzw. an der äußeren Mantelfläche der Vergußmasseeinbettungen entsprechend bemessene Nuten vorgesehen werden, in welche die Dichtungen eingelegt werden. Die entsprechenden Dichtflächen auf dem Zwischenring können dann als glatte Flächen ausgeführt werden.

Als bedeutend vorteilhafter hat es sich jedoch erwiesen, die Nuten zur Aufnahme der Dichtungen an dem Zwischenring anzuordnen, da hierdurch der Aufbau und damit die Herstellung des Hohlfasermoduls, der gegebenenfalls ein Wegwerfartikel ist, wesentlich vereinfacht wird.

Falls durch das Einlegen der Dichtungen in die ringförmigen Nuten der Abstand zwischen den Vergußmasseeinbettungen und dem Zwischenring und zwischen dem Zwischenring und der Innenseite des Gehäusemantels so stark verringert wird, daß ein einwandfreies Ableiten von Leckströmen nicht mehr gewährleistet ist, wird vorteilhafterweise zwischen den Dichtungen auf dem Zwischenring auf seiner Außenseite und auf seiner Innenseite ein umlaufender in sich geschlossener Ringkanal vorgesehen, die beide durch wenigstens eine radiale Bohrung miteinander in Verbindung stehen.

In Ausgestaltung der vorliegenden Erfindung wird daher eine Vorrichtung vorgeschlagen, bei welcher erfindungsgemäß der Zwischenring Ringnuten zur Aufnahme der äußeren und inneren Dichtungen und zwischen den äußeren Ringnuten einen über den gesamten Außenumfang des Zwischenringes sich erstreckenden in sich geschlossenen äußeren Ringkanal und zwischen den inneren Ringnuten einen über den gesamten Innenumfang des Zwischenringes sich erstreckenden in sich geschlossenen inneren Ringkanal aufweist und bei welcher beide Ringkanäle durch wenigstens eine Öffnung miteinander verbunden sind und bei welcher der äußere Ringkanal mit der zusätzlichen Fluidaustrittsöffnung im Gehäusemantel verbundenist.

In weiterer Ausgestaltung der Erfindung kann der Zwischenring mit dem Gehäusemantel oder mit den abnehmbaren Stirnplatten der erfindungsgemäßen Vorrichtung, die mit dem Gehäusemantel fluiddicht verbunden sind und Fluidanschlüsse aufweisen können, fest verbunden sein und eine Einheit bilden.

Die im Bereich der beiden Enden des Hohlfasermoduls angeordneten glatten Dichtflächen können durch entsprechende Bearbeitung der Vergußmasseeinbettungen hergestellt worden sein. Es ist jedoch auch möglich, die Dichtflächen an der Außenfläche rohrförmiger, die Vergußmasseeinbettungen umgebender und mit diesen fluiddicht verbundener zusätzlicher Dichtringe vorzusehen, falls sich die für die Einbettungen verwendete Vergußmasse als für eine ausreichende Abdichtung unzureichend erweisen sollte.

Falls erwünscht, kann die erfindungsgemäße Vorrichtung auch zur Aufnahme mehrerer Hohlfasermoduln ausgebildet werden. Im Falle mehrerer parallelgeschalteter in einem gemeinsamen Gehäusemantel angeordneter Moduln können dazu mehrere Zwischenrige miteinander verbunden und zu einer einzigen Abdichtungseinheit zusammengefaßt werden. Auch ist es möglich, eine solche aus mehreren Zwischenringen bestehende Abdichtungseinheit mit jeweils einer der abnehmbaren Stirnplatten fest zu verbinden.

Im Falle von in einem gemeinsamen Gehäuse angeordneten in Reihe hintereinandergeschalteten Hohlfasermoduln werden zweckmäßigerweise mehrere Gehäusemantelabschnitte durch entsprechend bemessene Zwischenstücke miteinander verbunden, wobei es hierbei besonders vorteilhaft ist, die Zwischenringe mit den Zwischenstücken fest zu verbinden, da eine solche Anordnung den Aus- und Einbau der Moduln wesentlich erleichtert. Die Zwischenstücke können dabei in gerader, gekrümmter, abgewinkelter oder U-Form oder beliebiger anderer Form ausgebildet sein. Auch können diese Zwischenstücke mit Anschlüssen für die zu behandelnden Fluide ausgestattet werden.

Als besonders vorteilhaft hat sich hierbei eine Ausführungsform erwiesen, bei welcher die Zwischenstücke in Form eines 180°-Rohrbogens ausgebildet sind. Diese Ausführungsform gestattet nämlich den Aus- und Einbau der Hohlfasermoduln durch Entfernen dieser Zwischenstücke, ohne daß die einzelnen Gehäusemantelabschnitte ebenfalls demontiert werden müssen, wie dies beispielsweise bei geraden Zwischenstücken und starren Rohrleitungsanschlüssen zu den Gehäusemantelabschnitten erforderlich sein kann.

Der Gehäusemantel, das Hohlfaserbündel, die Vergußmasseeinbettungen und der Zwischenring können prinzipiell beliebige Querschnittsformen haben. Es liegt auf der Hand, daß aus fertigungstechnischen Gründen dabei natürlich der kreisrunden Querschnittsform im allgemeinen der Vorzug zu geben sein wird, da hierdurch u. a. eine rasche und einfache Bearbeitung der betreffenden Teile beispielsweise auf üblichen Dreh- oder Schleifmaschinen ermöglicht wird. Falls aus anderen Gründen zweckmäßig, kann jedoch beispielsweise auch eine ovale oder elliptische Querschnittsform gewählt werden. Schließlich sind auch solche Querschnittsformen möglich, die dadurch entstehen, daß man bei einem Drei-, Vier- oder anderen Vieleck die Ecken abrundet. Eine solche mehr oder weniger starke Abrundung der Ecken ist dabei zur Erzielung einer guten Abdichtung zweckmäßig. Sofern gewünscht, können dabei die obengenannten Teile auch unterschiedliche Querschnittsformen aufweisen und miteinander kombiniert werden, wobei den dadurch hervorgerufenen nichtkonstanten radialen Abständen beispielsweise zwischen den Vergußmasseeinbettungen und dem Gehäusemantel durch entsprechende Bemessung und Formgebung der Zwischenringe und/oder der Dichtungen Rechnung getragen werden muß.

Das Gehäuse der Vorrichtung kann je nach Verwendungszweck und je nach den an die Vorrichtung gestellten Anforderungen aus jedwedem üblichen metallischen oder nicht-metallischen Werkstoff bestehen. Die Auswahl des zweckmäßigsten Werkstoffes für den erfindungsgemäß unter anderem vorgeschlagenen Zwischenring unterliegt unter Berücksichtigung der chemischen, thermischen und mechanischen Anforderungen ebenfalls keinerlei Beschränkungen. Das gleiche gilt für die Dichtungen, wobei man sich hierbei zweckmäßigerweise der hierfür üblichen Werkstoffe bedient. Bei entsprechender Bemessung des Zwischenringes und der zur Aufnahme der Dichtungen vorzusehenen Nuten sowie der im Bereich der beiden Enden des Gehäuses an der Innenfläche des Gehäusemantels angeordneten Dichtflächen ist es darüber hinaus möglich, auf genormte Dichtungen zurückzugreifen.

Zum Einbetten der Hohlfaserenden können übliche Kleber, aushärtbare Vergußmassen, Gießharze, Spezialzemente und dergleichen verwendet werden. Die Herstellung der für die erfindungsgemäße Vorrichtung verwendbaren Hohlfasermodule ist bekannt. Die Verwendung derselben ist hier nicht auf irgendwelche speziellen Typen beschränkt.

Unter Hohlfasermodul wird im Sinne der vorliegenden Erfindung ein Bündel oder Paket einer beliebigen Anzahl beliebig langer beliebig geformter Hohlfasern, Hohlfäden oder Schläuche verstanden, bei denen zumindest deren offene Enden in einem hierfür geeigneten Material eingebettet sind.

Die Querschnittsform des Hohlfaserbündels bzw. -paketes und der gegebenenfalls flanschförmig ausgebildeten Einbettungen können dabei hinsichtlich ihrer Form und Größe unterschiedlich sein, wobei die Größe und Form der Einbettungen selbstverständlich unter Zugrundelegung des vorliegenden Erfindungsgedankens an die Größe und Form des zu verwendenden Gehäusemantels der Vorrichtung anzupassen sind. Das gleiche gilt sinngemäß für die Länge des Moduls. Die Hohlfasern, aus denen der Modul aufgebaut ist, können gleiche oder unterschiedliche Länge haben. Weiterhin können die Hohlfasern in gerader Form und im wesentlichen parallel zueinander verlaufend angeordnet sein oder aber auch in Form von regelmäßigen und/ oder unregelmäßigen Schlaufen und/oder sich räumlich erstreckenden Wendeln und/oder Spiralen vorliegen, wobei die Hohlfasern auch in mehreren Lagen derart angeordnet sein können, daß die Hohlfasern benachbarter Lagen sich gegebenenfalls mehrfach kreuzen und/oder zumindest an den Kreuzungspunkten sich gegenseitig berühren.

Zum Schutz der Hohlfasern gegen Beschädigungen während des Transportes und des Ein- bzw. Ausbaues sowie zur Aufnahme von beispielsweise durch Druckdifferenzen während des Betriebes bewirkten Axialkräften ist es zweckmäßig, das Hohlfaserbündel beispielsweise mit einem grobmaschigen Gitterrohr oder einem perforierten Rohr zu ummanteln. Ein solches Stützrohr kann auch innerhalb des Hohlfasermoduls angeordnet werden, so wie auch stabförmige, spiralförmige oder beliebig anders geformte Stützkörper innerhalb und/oder außerhalb des Hohlfasermoduls vorgesehen werden können. Wichtig ist, daß die Stützkörper mit den Vergußmasseeinbettungen fest verbunden, z. B. in diese eingegossen, sind. Bei zur reinen Wärmeübertragung vorgesehenen Hohlfasermoduln können die Hohlfasern zu diesem oder anderem Zweck aber auch über ihre gesamte Länge in einer die Wärme gut leitenden Vergußmasse eingebettet sein.

Die Anzahl der Anschlüsse für die Zu- bzw. Abfuhr der verwendeten Fluide richtet sich nach dem jeweiligen Verfahren, so daß für jedes Fluid ein Anschlub oder zwei oder mehr Anschlüsse vorgesehen werden können.

Ein weiterer besonderer Vorteil der erfindungsgemäßen Vorrichtung ist u. a. darin zu sehen, daß — anders als beim Stand der Technik — die Dichtflächen an der Innenseite des Gehäusemantels wie auch die Dichtflächen an den Gußmasseeinbettungen des Moduls gleichen Durchmesser haben können, ohne daß beim Einbau des Hohlfasermoduls die Dichtungen beschädigt werden. Dies gestattet eine raschere und einfachere Herstellung sowohl des Gehäuses der Vorrichtung als auch des Hohlfasermoduls, da beide nämlich im wesentlichen symmetrisch aufgebaut sein können.

Die Erfindung wird nun anhand der Zeichnung näher erläutert : Es zeigen :

Figur 1 in vereinfachter schematischer und teilweise längsgeschnittener Darstellungsweise eine Ausführungsform der erfindungsgemäßen Vorrichtung, bei welcher der Zwischenring mit glatten Dichtflächen versehen ist,

Figur 2 in vereinfachter schematischer Darstellungsweise einen Längsschnitt durch einen Teil einer Ausführungsform der erfindungsgemäßen Vorrichtung, bei der der Zwischenring mit Nuten für die Dichtungen und mit Ringkanälen zum Ableiten von Leckströmen versehen ist,

Figur 3 in vereinfachter schematischer Darstellungsweise einen Längsschnitt durch einen Teil einer Ausführungsform der erfindungsgemäßen Vorrichtung, bei welcher der Zwischenring mit der Stirnplatte fest verbunden ist,

Figur 4 in vereinfachter schematischer Darstellungsweise einen Längsschnitt durch einen Teil einer Ausführungsform der erfindungsgemäßen Vorrichtung, bei welcher mindestens zwei Hohlfasermoduln in einem gemeinsamen Gehäuse angeordnet sind,

Figur 5 in vereinfachter schematischer Darstellungsweise mehrere hintereinandergeschaltete Hohlfasermoduln,

Figuren 6 bis 8 verschiedene mögliche Querschnittsformen der erfindungsgemäßen Vorrichtung,

Figuren 9 bis 10 eine weitere Ausgestaltungsform der erfindungsgemäßen Vorrichtung, bei welcher der Zwischenring mit dem Gehäusemantel fest verbunden ist.

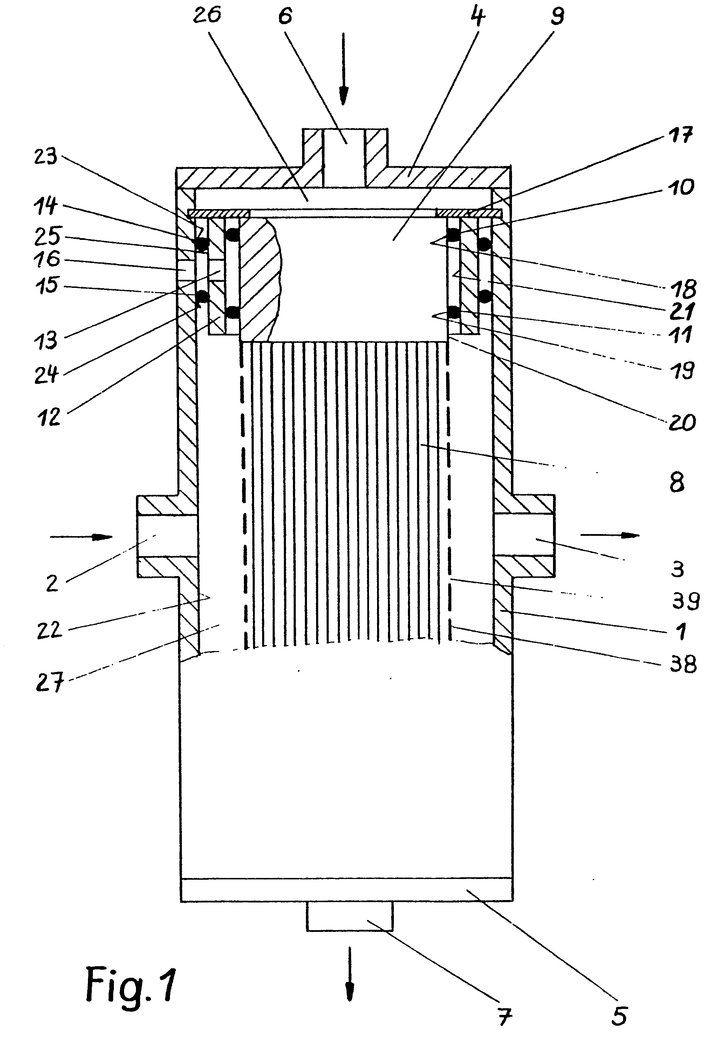

In Figur 1 sind folgende Teile einer Ausführungsform der erfindungsgemäßen Vorrichtung dargestellt : Das Gehäuse, bestehend aus dem Gehäusemantel 1 mit den Fluidanschlüssen 2 und 3 sowie den abnehmbaren Stirnplatten 4 und 5 mit den Fluidanschlüssen 6 und 7, der Hohlfasermodul 8 mit einer der beiden Vergußmasseeinbettungen 9 der Hohlfaserenden, die inneren Dichtungen 10 und 11, der Zwischenring 12 mit der radial verlaufenden Bohrung 13, die äußeren Dichtungen 14 und 15, die im Gehäusemantel 1 angeordnete zusätzliche Fluidaustrittsöffnung 16, der Sicherungsring 17, beispielsweise ein handelsüblicher Seegerring sowie das außerhalb des Hohlfaserbündels und dieses umgebende Stützrohr 38. Die inneren Dichtungen 10 und 11 liegen fluiddicht an den an der äußeren Mantelfläche 20 der Vergußmasseeinbettung 9 angeordneten Dichtflächen 18 bzw.

19 und an der inneren, ebenfalls als Dichtfläche ausgebildeten Mantelfläche 21 des Zwischenrings 12 an. Die äußeren Dichtungen 14 und 15 liegen fluiddicht an den an der Innenfläche 22 des Gehäusemantels 1 angeordneten Dichtflächen 23 bzw. 24 und an der ebenfalls als Dichtfläche ausgebildeten äußeren Mantelfläche 25 des Zwischenrings 12 an. Die Dichtflächen 18 ; 19 ; 23 und 24 können hierbei nutenförmig ausgebildet sein. Die radial durch den Zwischenring 12 verlaufende Bohrung 13 mündet in dem zwischen den äußeren Dichtungen 14 und 15 gebildeten äußeren Ringkanal und in dem zwischen den inneren Dichtungen 10 und 11 gebildeten inneren Ringkanal. Die im Gehäusemantel 1 angeordnete zusätzliche Fluidaustrittsöffnung 16 ist zwischen den äußeren Dichtungen 14 und 15 angeordnet. Auf diese Weise wird bei einer Undichtigkeit einer der vier Dichtungen 10 ; 11 ; 14 ; 15 verhindert, daß das Fluid aus der Kammer 26 in der Kammer 27 gelangt oder umgekehrt, da ein derartiger Leckstrom durch die zusätzliche Fluidaustrittsöffnung 16 nach außen tritt und vom Bedienungspersonal oder durch entsprechende Meßeinrichtungen wahrgenommen werden kann. Das im wesentlichen starre Stützrohr 38 ist fest mit den Vergußmasseeinbettungen 9 verbunden und besitzt Öffnungen 39 zum Hindurchleiten des Fluids. Zum Auswechseln des Hohlfasermoduls 8 werden die Stirnplatte 4 und der Sicherungsring 17 gelöst, worauf der Hohlfasermodul 8 und der Zwischenring 12 mit den Dichtungen 10 ; 11 ; 14 und 15 aus dem Gehäuse herausgezogen werden können. Der Einsatz eines neuen Hohlfasermoduls geschieht dann in umgekehrter Reihenfolge, wobei die Dichtungen zweckmäßigerweise zuvor mit einem geeigneten Fett eingefettet werden können.

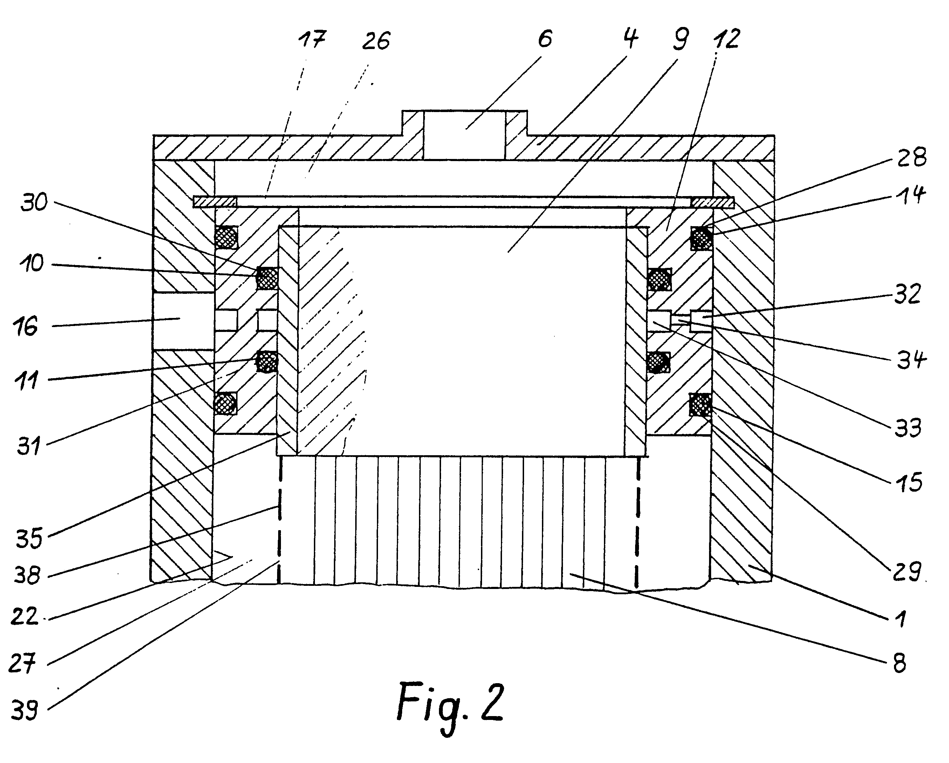

Bei der in Figur 2 dargestellten Ausführungsform der erfindungsgemäßen Vorrichtung sind alle Teile, die den in Figur 1 dargestellten entsprechen, mit gleichen Positionszahlen versehen. Eine Aufzählung derselben erübrigt sich daher. Bei dieser Ausführungsform besitzt der Zwischenring 12 zwei äußere über den Außenumfang des Zwischenringes 12 sich erstreckende Ringnuten 28 und 29 zur Aufnahme der äußeren Dichtungen 14 bzw. 15 sowie zwei über den Innenumfang des Zwischenringes 12 sich erstreckende Ringnuten 30 und 31 zur Aufnahme der inneren Dichtungen 10 bzw. 11. Weiterhin besitzt der in Figur 2 dargestellte Zwischenring 12 einen über seinen Außenumfang sich erstreckenden in sich geschlossenen äußeren Ringkanal 32 und einen über seinen Innenumfang sich erstreckenden in sich geschlossenen inneren Ringkanal 33, die beide durch die Öffnung 34 miteinander verbunden sind. Der äußere Ringkanal 32 ist zwischen den äußeren Dichtungen 14 und 15, der innere Ringkanal 33 zwischen den inneren Dichtungen 10 und 11 angeordnet. Die zusätzliche Fluidaustrittsöffnung 16 steht mit dem äußeren Ringkanal 32 in Verbindung, so daß ein durch die Dichtungen 10 ;

11 ; 14 oder 15 hindurchtretender Leckstrom nach außen treten kann. Bei dieser in Figur 2 dargestellten Ausführungsform ist weiterhin die Vergußmasseeinbettung 9 mit einem aus einem anderen Werkstoff hergestellten, mit der Vergußmasseeinbettung 9 jedoch fest, d. h. fluiddicht, verbundenen rohrförmigen Dichtring 35 umgeben. Eine solche Ausführungsform kann dann gewählt werden, wenn das für die Einbettung der Hohlfaserenden verwendete Material zur Ausbildung von Dichtflächen nicht oder nur unzureichend geeignet ist. Der Ein- und Ausbau des Hohlfasermoduls 8 geschieht bei dieser Ausführungsform in der für die in Figur 1 dargestellte Ausführungsform beschriebenen Weise.

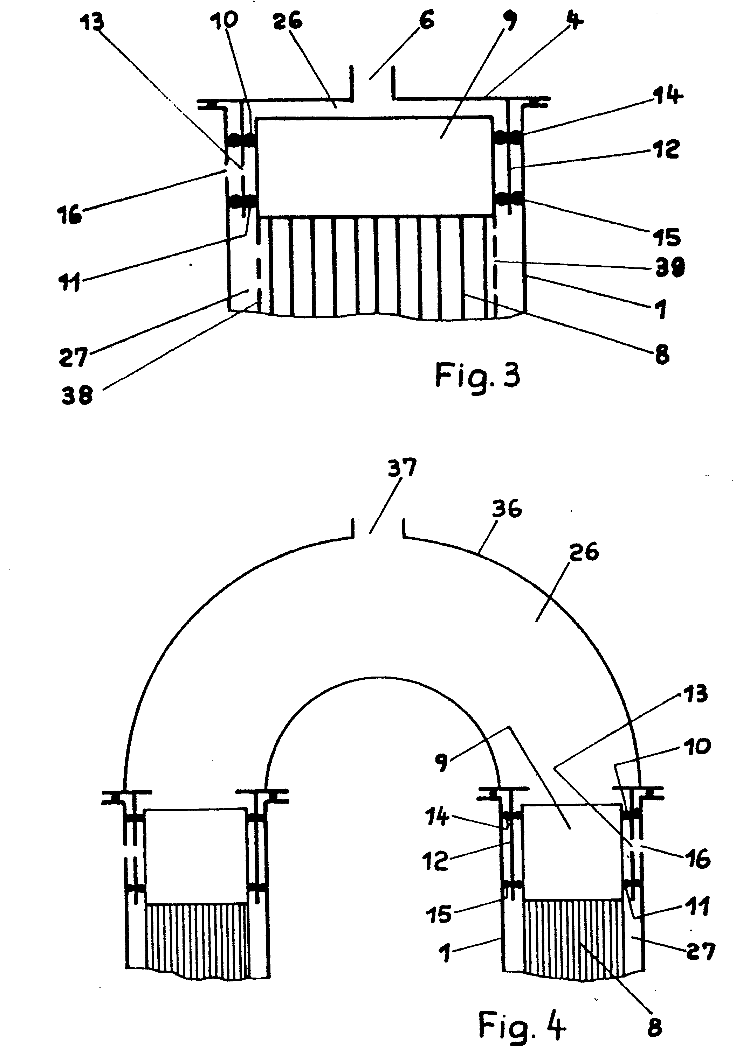

In Figur 3 ist eine Ausführungsform der erfindungsgemäßen Vorrichtung dargestellt, bei welcher der Zwischenring 12 mit der Stirnplatte 4 fest verbunden ist und mit ihr eine Einheit bildet. Auf der nicht dargestellten gegenüberliegenden Seite der Vorrichtung kann der Zwischenring ebenfalls mit der dort angeordneten Stirnplatte zu einer Einheit fest verbunden sein. Es können jedoch auch die Ausführungsformen, wie sie in Fig. 1 und 2 dargestellt sind, mit der hier beschriebenen Ausführungsform des Zwischenringes kombiniert werden. Bei der in Fig. 3 dargestellten Ausführungsform des Zwischenringes ist es besonders vorteilhaft, wenn dieser — wie in Fig. 2 dargestellt — die Ringnuten 28 ; 29 ; 30 ; 31 zur Aufnahme der äußeren und inneren Dichtungen 10 ; 11 ; 14 bzw. 15 sowie den inneren Ringkanal 33 und den äußeren Ringkanal 32 aufweist.

Alle übrigen Teile der in Fig. 3 dargestellten Ausführungsform der erfindungsgemäßen Vorrichtung entsprechen ihren Positionszahlen gemäß den in Fig. 1 bzw. 2 dargestellten Teilen.

In Fig. 4 ist eine Ausführungsform der erfindungsgemäßen Vorrichtung dargestellt, die es ermöglicht, zwei oder mehrere Hohlfasermoduln 8 in einem gemeinsamen Gehäuse anzuordnen. Zu diesem Zweck kann jeder Abschnitt des Gehäusemantels 1, in welchem ein Hohlfasermodul 8 angeordnet ist, mit einem anderen Abschnitt des Gehäuses 1 durch ein Zutschenstück 36 verbunden werden. Dieses Zwischenstück 36 ist in Fig. 4 in Form eines 180°-Bogens dargestellt, kann je nach Bedarf jedoch auch beispielsweise in gerarder Form, als Eckstück oder in Bogenform ausgebildet sein. Unabhängig von der jeweils am besten geeigneten Form des Zwischenstücks 36 ist es besonders vorteilhaft, wenn, wie in Fig. 4 dargestellt, die Zwischenringe 12 mit dem Zwischenstück 36 fest zu einer Einheit verbunden sind. Zur Erleichterung des Zusammenbaues einer solchen Ausführungsform wird zweckmäßigerweise eine Ausführungsform des Zwischenringes 12 gewählt, wie sie in Fig. 2 dargestellt ist. Die in Fig. 4 ausschnittsweise dargestellte Ausführungsform der erfindungsgemäßen Vorrichtung ist insbesondere dann geeignet, wenn mehrere Hohlfasermoduln 8 hintereinander geschaltet werden sollen. Durch Anordnen einer Fluideintritts- bzw. Austrittsöffnung 37

in dem Zwischenstück 36 kann eine Teilung des Fluidstroms erreicht werden, so daß auf diese Weise ein oder mehrere Hohlfasermoduln in paralleler Fahrweise betrieben werden können. Alle übrigen Teile der in Fig. 4 dargestellten Ausführungsform entsprechen ihren Positionszahlen gemäß den in den Fig. 1 bis 3 dargestellten Teilen. Übersichtlichkeitshalber wurden in Fig. 4 nur die Teile der rechten Figurhälfte mit Positionszahlen versehen. Die Identifizierung der Teile der linken Figurhälfte ist jedoch einfach, da diese spiegelbildlich zu den entsprechenden Teilen der rechten Figurhälfte abgebildet sind.

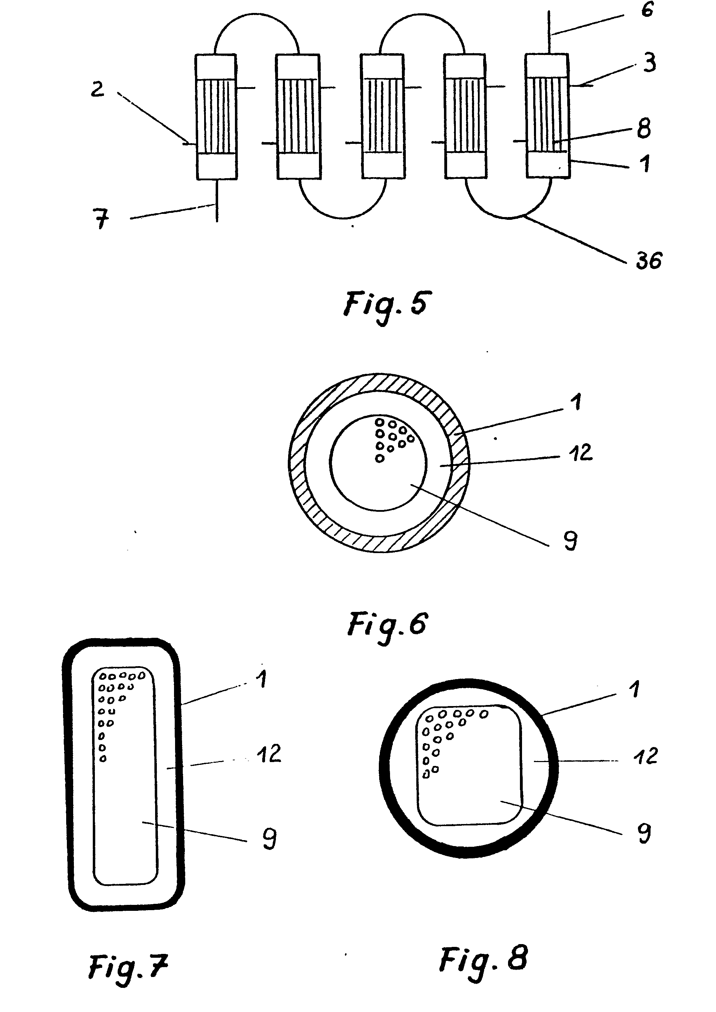

Bei der in Figur 5 dargestellten Ausführungsform sind fünf Hohlfasermoduln 8 in einem gemeinsamen Gehäuse angeordnet, wobei die einzelnen jeweils einen Hohlfasermodul 8 umgebenden Gehäusemäntel 1 durch Verbindungsstücke 36 wie in Figur 4 dargestellt, miteinander verbunden sind, die die Form eines 180°-Bogens aufweisen. Die Fluidanschlüsse 2 ; 3 ; 6 und 7 sind ebenfalls angedeutet.

Bei der in Figur 6 im Schnitt dargestellten Ausführungsform haben der Gehäusemantel 1, der Zwischenring 12 sowie die Vergußmasseeinbettungen 9 eine kreisrunde Querschnittsform.

Bei der in Figur 7 dargestellten Ausführungsform haben der Gehäusemantel 1, der Zwischenring 12 sowie die Vergußmasseeinbettungen 9 eine Querschnittsform, wie sie entsteht, wenn man bei einem Rechteck die Ecken abrundet.

Bei der in Figur 8 dargestellten Ausführungsform hat der Gehäusemantel 1 eine kreisrunde Querschnittsform und die Vergußmasseeinbettung 9 eine solche, wie sie entsteht, wenn man bei einem Quadrat die Ecken abrundet. Der Zwischenring 12 ist so bemessen und geformt, daß er den Zwischenraum zwischen Gehäusemantel 1 und jeder der Vergußmasseeinbettungen 9, zwar mit einem Spiel, aber im wesentlichen vollständig ausfüllt.

In den Figuren 5 bis 8 sind zur Vereinfachung die Dichtungen 10 ; 11 ; 14 und 15 sowie andere Teile, wie sie in den vorherigen Figuren enthalten sind, nicht dargestellt. Darüber hinaus beschränkt sich die Erfindung nicht auf die in den Figuren 6 bis 8 dargestellten Querschnittsformen.

Es hat sich weiterhin gezeigt, daß es nicht immer erforderlich ist, den erfindungsgemäß vorgeschlagenen Zwischenring als loses bzw. lösbares Teil der erfindungsgemäßen Vorrichtung auszubilden, sondern es ist häufig möglich und kann sogar vorteilhaft sein, den an jedem Ende des Gehäuses vorgesehenen Zwischenring fest und flüssigkeitsdicht mit dem Gehäusemantel zu verbinden. Eine solche Verbindung zwischen Zwischenring und Gehäusemantel kann beispielsweise durch Verschweißen, Verlöten, Verkleben, Verkitten u. dgl. hergestellt werden. Bei dieser Ausführungsform der erfindungsgemäßen Vorrichtung werden in vorteilhafter Weise die sonst zwischen jedem Zwischenring und dem Gehäusemantel erforderlichen Dichtungen eingespart. Es ist jedoch auch hierbei weiterhin möglich, Zwischenringe zu verwenden, die aus einem anderen Werkstoff gefertigt sind als der Gehäusemantel. Darüber hinaus kann auch bei dieser Ausführungsform jeder Zwischenring ansonsten die gleichen Merkmale aufweisen, wie sie der bereits oben beschriebene lose bzw. lösbare Zwischenring aufweist.

In weiterer Ausgestaltung können die erfindungsgemäß vorgeschlagenen Zwischenringe mit dem Gehäusemantel eine Einheit bilden. Bei einer besonders bevorzugten Variante dieser Ausführungsform der erfindungsgemäßen Vorrichtung besteht der Gehäusemantel aus einem rohrförmigen Mittelteil mit Fluidanschlüssen und einem Endstück an jedem Ende des rohrförmigen Mittelteils, die mit diesem nach außen flüssigkeitsdicht verbunden, beispielsweise verschweißt, verlötet, verschraubt oder verklebt, sind, wobei der Zwischenring an jedem Ende des Gehäusemantels und das entsprechende Endstück aus einem Stück gefertigt sind, also eine Einheit bilden.

In der Beschreibung der Figuren 1 und 2 waren als Mittel zur axialen Fixierung des Hohlfasermoduls im Gehäuse der erfindungsgemäßen Vorrichtung beispielshalber Sicherungsringe (Pos. 17), die in Form handelsüblicher Seegerringe vorliegen können, vorgeschlagen worden. Es ist jedoch auch möglich, zum selben Zweck Stiftschrauben vorzusehen, die von außen in das Gehäuse eingeschraubt werden und in das Innere des Gehäuses hineinragen. Die Anzahl dieser Stiftschrauben sollte mindestens drei an jedem Ende betragen, und die Stiftschrauben sollten möglichst gleichmäßig auf dem Umfang verteilt angeordnet sein. Werden in dem zu fixierenden Hohlfasermodul an geeigneter Stelle entsprechende Vertiefungen vorgesehen, in welche die Spitzen der Stiftschrauben hineinragen, so wird dadurch ebenfalls eine sehr gute axiale Fixierung des Hohlfasermoduls im Gehäuse erreicht. Die Stiftschrauben können jedoch auch so angeordnet sein, daß ihr axialer Abstand geringfügig größer bemessen ist als die Länge des zu fixierenden Hohlfasermoduls.

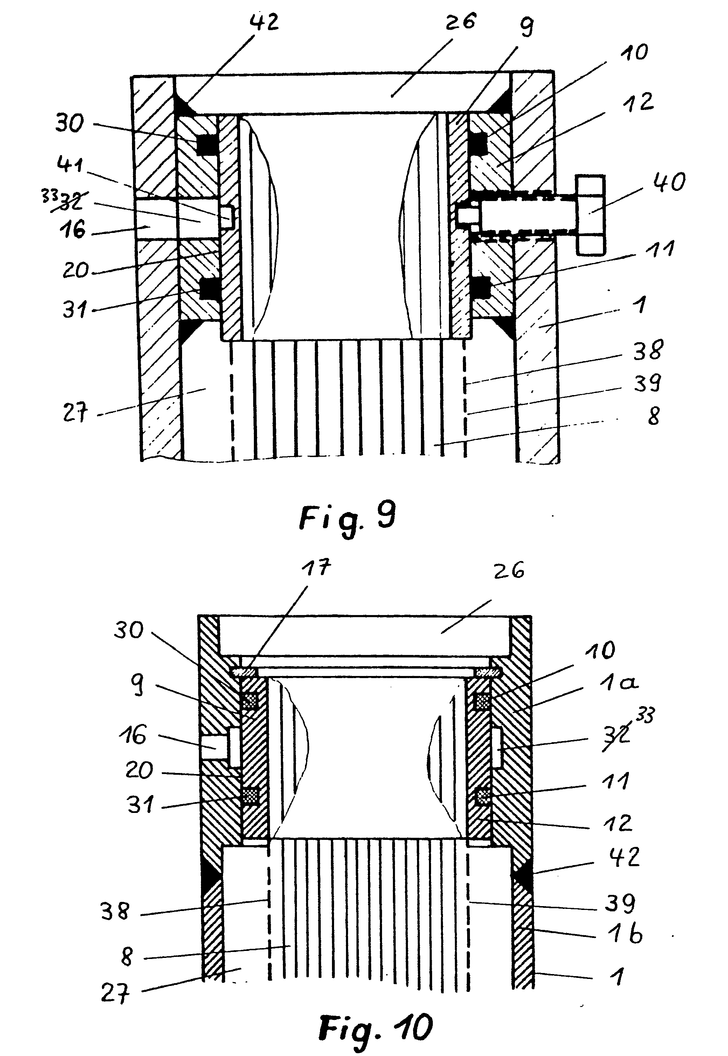

Die Figuren 9 und 10 zeigen in vereinfachter schematischer Darstellungsweise einen Längsschnitt durch die erfindungsgemäße Vorrichtung, bei welcher der Zwischenring 12 fest mit dem Gehäusemantel 1, beispielsweise durch Schweißnähte 42 fluiddicht verbunden ist. Zur Vereinfachung wurde in beiden Figuren nur jeweils das obere Teil der erfindungsgemäßen Vorrichtung dargestellt, da das untere Teil im allgemeinen analog, d. h. spiegelbildlich ausgeführt sein kann. In Figur 9 sind weiterhin folgende Teile dargestellt : Der in dem Gehäusemantel 1 angeordnete Hohlfasermodul 8 mit einer der beiden Vergußmasseeinbettungen 9 der Hohlfaserenden, die inneren Dichtungen 10 und 11, die im Gehäusemantel 1 angeordnete zusätzliche Fluidaustrittsöffnung 16 zur Kontrolle eventuell auftretender Leckströme, der außerhalb des Hohlfaserbündels des Hohlfasermoduls 8 angeordnete und dieses umgebende Stützkörper (z. B. ein Stützrohr) 38 mit den Fluiddurchtrittsöffnungen 39, der umlaufende in sich geschlossene (innere) Ringkanal 33, die über den Innenumfang des Zwischenringes 12 sich erstreckenden Ringnuten 30 und 31 zur Aufnahme der inneren Dichtungen 10 bzw. 11, welche fluiddicht an der äußeren Mantelfläche 20 der Vergußmasseeinbettung 9 anliegen, eine der Stiftschrauben 40 zur axialen Fixierung des Hohlfasermoduls 8 im Gehäusemantel 1 sowie zwei der Vertiefungen 41, in welche die Spitzen der Stiftschrauben 40 hineinreichen. Bei der Bemessung der Stiftschrauben 40 ist darauf zu achten, daß der Ringkanal 33 an den betreffenden Stellen durch die Stiftschrauben 40 nicht völlig ausgefüllt wird, damit eventuell in den Ringkanal 32 eintretendes Leckfluid mit Sicherheit zu der Austrittsöffnung 16 gelangen kann. Nicht dargestellt sind in beiden Figuren die abnehmbaren Stirnplatten 4, 5 zum Verschließen des Gehäuses sowie die Anschlüsse zum Zuführen und Ableiten der Fluide. Zur Vereinfachung kann statt einer entsprechenden Anzahl von Vertiefungen 41 auch an der äußeren Mantelfläche 20 der Vergußmasseeinbettung 9 eine umlaufende Ringnut vorgesehen werden, in die die Spitzen der Stiftschrauben 40 hineinragen. Es ist wichtig, daß der Ringkanal 33 zwischen den Dichtungen 10 und 11 angeordnet ist, damit bei einem Leck an einer der beiden Dichtungen 10 ; 11 ein Kurzschluß zwischen den beiden Fluidkammern 26 und 27 mit Sicherheit vermieden wird. Das im wesentlichen starre Stützrohr 38 ist fest mit den Vergußmasseeinbettungen verbunden. Zum Auswechseln des Hohlfasermoduls 8 werden die nicht dargestellten Stirnplatten und die Stiftschrauben 40 gelöst, worauf der Hohlfasermodul 8 aus dem Gehäuse herausgezogen werden kann, während die Dichtringe 10 und 11 im Zwischenring 12 verbleiben. Falls ein Auswechseln derselben erforderlich ist, kann dies auf einfache Weise nach dem Herausziehen des Hohlfasermoduls 8 durchgeführt werden. Der Einsatz eines neuen Hohlfasermoduls geschieht dann in umgekehrter Reihenfolge, d. h. die Stiftschrauben 40 werden nach dem Einbringen des Hohlfasermoduls wieder eingeschraubt und die nicht dargestellten Stirnplatten zum Verschließen des Gehäuses wieder angebracht.

Bei der in Figur 10 dargestellten Ausführungsform der erfindungsgemäßen Vorrichtung sind der Zwischenring 12 und das Endstück 1a des Gehäusemantels 1 aus einem Stück gefertigt und ist das Endstück 1a mit dem Mittelteil 1b des Gehäusemantels 1 durch eine Schweißnaht 42 fest und nach außen fluiddicht verbunden. Im übrigen sind alle Teile, die den in Figur 9 dargestellten Teilen entsprechen, mit gleichen Positionszahlen versehen. Eine Aufzählung und Erläuterung derselben erübrigt sich daher. Im Unterschied zu der in Figur 9 dargestellten Ausführungsform wird bei der in Figur 10 dargestellten Ausführungsform die axiale Fixierung des Hohlfasermoduls 8 durch einen Sicherungsring 17, beispielsweise einen handelsüblichen Seegerring, bewirkt. Dieser Sicherungsring 17 ist in einer eigens dafür vorgesehenen am inneren Umfang des Zwischenrings 12 vorgesehenen Nut eingelassen. Bei dieser Ausführungsform sind die innere Dichtungen 10 und 11 in Ringnuten angeordnet, die in der äußeren Mantelfläche 20 der Vergußmasseeinbettung 9 angeordnet sind. Dementsprechend ist der Zwischenring 12 auf seiner Innenfläche glatt ausgeführt. Zum Auswechseln des Hohlfasermoduls 8 werden bei dieser Ausführungsform die nicht dargestellten Stirnplatten und der Sicherungsring 17 gelöst, worauf der Hohlfasermodul 8 mit den Dichtungen 10 und 11 aus dem Gehäuse herausgezogen werden kann. Der Einsatz eines neuen Hohlfasermoduls geschieht dann wiederum in umgekehrter Reihenfolge, wobei die Dichtungen 10 und 11 zweckmäßigerweise zuvor mit einem geeigneten Fett eingefettet werden können.

Falls eine axiale Ausdehnung des Hohlfasermoduls 8 gewünscht wird, ist es ohne weiteres möglich, die axiale Fixierung desselben, sei es mit Hilfe eines Sicherungsrings 17, von Stiftschrauben 40 oder anderer geeigneter an sich bekannter Mittel, nur an einer Seite des Hohlfasermoduls 8 vorzusehen und die andere Seite desselben sich frei axial ausdehnen zu lassen.

Um zu vermeiden, daß die Dichtungen 10 ; 11 beim Einschieben des Hohlfasermoduls 8 in den Gehäusemantel 1 beschädigt werden, ist es im allgemeinen von Vorteil, den Ringkanal 33 und die Dichtungen 10 und 11 auf einer Seite, d. h. entweder an der äußeren Mantelfläche 20 der Vergußmasseeinbettungen 9 oder an der Innenfläche des Zwischenrings 12 anzuordnen und die jeweils andere, also der genannten Fläche gegenüberliegende, Fläche glatt auszuführen.

## Ansprüche

1. Vorrichtung zur Wärme- und/oder Stoffübertragung von wenigstens einem ersten Fluid auf wenigstens ein zweites bzw. zum Stoffaustausch zwischen wenigstens zwei Fluiden mittels Hohlfasern aus spinnbaren synthetischen Polymeren bestehend aus einem Gehäuse mit Anschlüssen für das Zu- und Abführen der Fluide, einem lösbar mit dem Gehäuse verbundenen Hohlfasermodul, bei dem die offenen Hohlfaserenden in einer Vergußmasse eingebettet und die Vergußmasseeinbettungen durch wenigstens einen im wesentlichen starren Stützkörper miteinander verbunden sind, sowie radial wirkenden Dichtungen zwischen den Verteil- bzw. Sammelkammern für die Fluide, gekennzeichnet durch einen im Bereich der Vergußmasseeinbettungen (9) der Hohlfaserenden angeordneten Zwischenring (12), wenigstens zwei zwischen dem Zwischenring (12) und der Innenfläche (22) des Gehäusemantels (1) in einem Abstand voneinander angeordnete äußere Dichtungen (14 ; 15), wenigstens zwei zwischen dem Zwischenring (12) und den Mantelflächen (20) der Vergußmasseeinbettungen (9) in einem Abstand voneinander angeordnete innere Dichtungen (10 ; 11), wenigstens eine im wesentlichen radial durch den Zwischenring (12) verlaufende zwischen den äußeren Dichtungen (14 ; 15) und zwischen den inneren Dichtungen (10 ; 11) mündende Bohrung (13) und wenigstens eine im Gehäusemantel (1) zwischen den äußeren Dichtungen (14 ; 15) angeordnete zusätzliche Fluidaustrittsöffnung (16).

2. Vorrichtung nach Anspruch 1, dadurch gekennzeichnet, daß der Gehäusemantel (1) und die Vergußmasseeinbettungen (9) der Hohlfaserenden einen nichteckigen Querschnitt aufweisen.

3. Vorrichtung nach Anspruch 1 und 2, dadurch gekennzeichnet, daß der Zwischenring (12) Ringnuten (28 ; 29 ; 30 ; 31) zur Aufnahme der äußeren und inneren Dichtungen (10 ; 11 ; 14 ; 15) und zwischen den äußeren Ringnuten (28 ; 29) einen über den gesamten Außenumfang des Zwischenringes (12) sich erstreckenden in sich geschlossenen äußeren Ringkanal (32) und zwischen den inneren Ringnuten (30 ; 31) einen über den gesamten Innenumfang des Zwischenringes (12) sich erstreckenden in sich geschlossenen inneren Ringkanal (33) aufweist und daß beide Ringkanäle (32 ; 33) durch wenigstens eine Öffnung (34) miteinander verbunden sind und daß der äußere Ringkanal (32) mit der zusätzlichen Fluidaustrittsöffnung (16) im Gehäusemantel (1) verbunden ist.

4. Vorrichtung nach Anspruch 1 bis 3, dadurch gekennzeichnet, daß die Vergußmasseeinbettungen (9) mit je einem rohrförmigen Dichtring (35) aus einem unterschiedlichen Werkstoff umgeben und fluiddicht mit diesem verbunden sind.

5. Vorrichtung nach Anspruch 1 bis 4, dadurch gekennzeichnet, daß wenigstens zwei Abschnitte des Gehäuses (1), die je einen Hohrfasermodul (8) aufweisen, durch wenigstens ein Zwischenstück (36) miteinander verbunden sind, und daß die Zwischenringe (12) mit dem Zwischenstück bzw. mit den Zwischenstücken (36) fest verbunden sind.

6. Vorrichtung nach Anspruch 5, dadurch gekennzeichnet, daß das Zwischenstück bzw. die Zwischenstücke (36) in Form eines 180°-Bogens ausgeführt ist bzw. sind.

7. Vorrichtung nach Anspruch 1 bis 6, dadurch gekennzeichnet, daß der starre Stützkörper (38) ein innerhalb und/oder außerhalb des Hohlfaserbündels bzw. -paketes angeordnetes perforiertes Rohr oder Gitterrohr ist.

8. Vorrichtung nach Anspruch 1 bis 7 dadurch gekennzeichnet, daß der Zwischenring (12) fest und flüssigkeitsdicht mit dem Gehäusemantel (1) verbunden ist.

9. Vorrichtung nach Anspruch 1 bis 9 dadurch gekennzeichnet, daß jedes Endstück des Gehäusemantels (1) und der dazugehörende Zwischenring (12) aus einem Stück gefertigt sind und die Endstücke mit dem Mittelteil des Gehäusemantels (1) fest verbunden sind.

10. Vorrichtung nach Anspruch 1 bis 5, dadurch gekennzeichnet, daß der Zwischenring (12) mit einer Stirnplatte (4, 5) fest verbunden ist.

11. Vorrichtung nach Anspruch 1 bis 10, dadurch gekennzeichnet, daß zur axialen Fixierung des Hohlfasermoduls (8) in dem Gehäuse entweder Sicherungsringe (17) oder mindestens je drei von außen in den Gehäusemantel einschraubbare radial gerichtete gleichmäßig auf dem Umfang verteilte in das Innere des Gehäuses hineinragende Stiftschrauben (40) angeordnet sind.

**Claims**

1. An apparatus for the transfer of heat and/or material from at least one first fluid to at least one second fluid, or for the exchange of material between at least two fluids by means of hollow fibres of spinnable synthetic polymers, comprising a housing having connections for the supply and removal of the fluids, a hollow fibre module connected detachably to the housing and in which the open hollow fibre ends are embedded in a sealing compound and the sealing compound beddings are interconnected by at least one substantially rigid supporting body, as well as radially acting seals between the distribution or collecting chambers for the fluids, characterised by an intermediate ring (12) positioned in the region of the sealing compound beddings (9) of the hollow fibre ends, at least two outer seals (14 ; 15) which are positioned at a spacing from one another between the intermediate ring (12) and the inside surface (22) of the housing casing (1), at least two inner seals (10 ; 11) which are positioned at a spacing from one another between the intermediate ring (12) and the outer surfaces (20) of the sealing compound beddings (9), at least one bore (13) which runs substantially radially through the intermediate ring (12) and opens between the outer seals (14 ; 15) and between the inner seals (10 ; 11), and at least one additional fluid outlet opening (16) positioned in the housing casing (1) between the outer seals (14 ; 15).

2. An apparatus according to claim 1, characterised in that the housing casing (1) and the sealing compound embeddings (9) of the hollow fibre ends have a non-angular cross-section.

3. An apparatus according to claims 1 and 2, characterised in that the intermediate ring (12) has annular grooves (28 ; 29 ; 30 ; 31) for accommodating the outer and inner seals (10 ; 11 ; 14 ; 15) and has between the outer annular grooves (28 ; 29), an outer annular channel (32) which is closed on itself and extends over the complete external circumference of the intermediate ring (12), and has between the inner annular grooves (30 ; 31) an inner annular channel (33) which is closed on itself and extends over the complete internal circumference of the intermediate ring (12), and both annular channels (32 ; 33) are interconnected by at least one opening (34), and the outer annular channel (32) is connected with the additional fluid outlet opening (16) in the housing casing (1).

4. An apparatus according to claims 1 to 3, characterised in that the sealing compound beddings (9) are each surrounded by a tubular sealing ring (35) of a different material and are connected therewith in a fluid-tight manner.

5. An apparatus according to claims 1 to 4, characterised in that at least two sections of the housing (1) which each have a hollow fibre module (8), are interconnected by at least one intermediate part (36), and the intermediate rings (12) are firmly connected to the intermediate part or to the intermediate parts (36).

6. An apparatus according to claim 5, characterised in that the intermediate part or the intermediate parts (36) is/are designed in the shape of a 180° arc.

7. An apparatus according to claims 1 to 6, characterised in that the rigid supporting body (38) is a perforated tube or grid tube positioned inside and/or outside the hollow fibre bundle or package.

8. An apparatus according to claims 1 to 7, characterised in that the intermediate ring (12) is connected to the housing casing (1) in a firm and liquid-tight manner.

9. An apparatus according to claims 1 to 9, characterised in that each end piece of the housing casing (1) and of the relevant intermediate ring (12) are produced from one piece, and the end pieces are firmly connected to the middle part of the housing casing (1).

10. An apparatus according to claims 1 to 5, characterised in that the intermediate ring (12) is firmly connected to a front plate (4, 5).

11. An apparatus according to claims 1 to 10, characterised in that either locking rings (17) or respectively at least three stud bolts (40) which may be screwed from outside into the housing casing, are directed radially, are distributed regularly over the circumference and project inside the housing, are provided to fix the hollow fibre module (8) axially in the housing.

## Revendications

1. Dispositif pour le transfert de chaleur et/ou de matière d'au moins un premier fluide à au moins un deuxième ou pour l'échange de matière entre au moins deux fluides au moyen de fibres creuses en polymères synthétiques filables, constitué par une enceinte avec raccords pour l'entrée et la sortie des fluides, par un module de fibres creuses fixé de façon amovible à l'enceinte et dans lequel les extrémités ouvertes des fibres creuses sont enrobées dans une masse de scellement et les enrobages mutuellement raccordés par au moins un support sensiblement rigide ainsi que par des joints agissant radialement entre les chambres distributrices et les chambres collectrices pour les fluides, caractérisé par une bague intermédiaire (12) placée dans la zone des enrobages (9) des extrémités des fibres, par au moins deux joints extérieurs (14, 15) disposés à distance l'un de l'autre entre la bague intermédiaire (12) et la surface interne (22) de l'enveloppe (1) de l'enceinte, par au moins deux joints intérieurs (10, 11) disposés à distance l'un de l'autre entre la bague intermédiaire (12) et les surfaces latérales (20) des enrobages (9), par au moins un perçage (13) traversant sensiblement radialement la bague intermédiaire (12) et débouchant entre les joints extérieurs (14, 15) et entre les joints intérieurs (10, 11), et par au moins un orifice de sortie de fluide supplémentaire (16) placé dans l'enveloppe (1) de l'enceinte entre les joints extérieurs (14, 15).

2. Dispositif selon la revendication 1, caractérisé par le fait que l'enveloppe (1) de l'enceinte et les enrobages (9) des extrémités des fibres creuses présentent une section transversale non polygonale.

3. Dispositif selon les revendications 1 et 2, caractérisé par le fait que la bague intermédiaire (12) comporte des gorges annulaires (28 ; 29 ; 30 ; 31) pour recevoir les joints extérieurs et intérieurs (10 ; 11 ; 14 ; 15) ainsi que, entre les gorges annulaires extérieures (28 ; 29), un canal annulaire externe (32) en soi fermé s'étendant sur toute la périphérie extérieure de la bague intermédiaire (12) et, entre les gorges annulaires intérieures (30 ; 31), un canal annulaire interne (33) en soi fermé s'étendant sur toute la périphérie intérieure de la bague intermédiaire (12), que tous les deux canaux annulaires (32 ; 33) sont mutuellement raccordés par au moins une ouverture (34) et que le canal annulaire externe (32) est relié à l'orifice de sortie supplémentaire de liquide (16) pratiqué dans l'enveloppe (1) de l'enceinte.

4. Dispositif selon les revendications 1 à 3, caractérisé par le fait que les enrobages (9) sont entourés par une bague d'étanchéité tubulaire (35) qui est réalisée en un matériau différent et avec laquelle ils sont raccordés de façon étanche au fluide.

5. Dispositif selon les revendications 1 à 4, caractérisé par le fait qu'au moins deux sections de l'enceinte (1) qui comportent respectivement un module de fibres creuses (8) sont reliées par au moins un élément intermédiaire (36) et que les bagues intermédiaires (12) sont rigidement raccordées à l'élément intermédiaire ou aux éléments intermédiaires (36).

6. Dispositif selon la revendication 5, caractérisé par le fait que l'élément intermédiaire ou les éléments intermédiaires (36) sont réalisés sous la forme d'un arc de 180°.

7. Dispositif selon les revendications 1 à 6, caractérisé par le fait que le support rigide (38) est un tube perforé ou un tube à treillis disposé à l'intérieur et/ou à l'extérieur du faisceau ou du paquet de fibres creuses.

8. Dispositif selon les revendications 1 à 7, caractérisé par le fait que la bague intermédiaire (12) est raccordée solidement et de façon étanche au liquide à l'enveloppe (1) de l'enceinte.

9. Dispositif selon les revendications 1 à 9, caractérisé par le fait que chaque élément d'extrémité de l'enveloppe (1) de l'enceinte et la bague intermédiaire correspondante (12) sont réalisés en une seule pièce, et que les éléments d'extrémités sont solidement raccordés à la partie médiane de l'enveloppe (1) de l'enceinte.

10. Dispositif selon les revendications 1 à 5, caractérisé par le fait que la bague intermédiaire (12) est solidement raccordée à une plaque frontale (4, 5).

11. Dispositif selon les revendications 1 à 10, caractérisé par le fait que pour la fixation axiale du module de fibres creuses (8) dans l'enceinte, on utilise soit des anneaux de retenue (17), soit au moins trois boulons filetés (40) dirigés radialement, pouvant être vissés de l'extérieur dans l'enveloppe de l'enceinte, répartis régulièrement sur la périphérie et faisant saillie à l'intérieur de l'enceinte.

Fig.1

Fig. 2

Fig. 3

Fig. 4

Fig. 5

Fig. 6

Fig. 7

Fig. 8

4

0 046 889

**Fig. 9**

**Fig. 10**